# EUROPÄISCHE PATENTSCHRIFT

(11) **EP 3 782 482 B1**
(45) Veröffentlichungstag und Bekanntmachung des Hinweises auf die Patenterteilung: **12.06.2024**
(21) Anmeldenummer: 20191561.8
(22) Anmeldetag: 18.08.2020
(51) Int. Cl.: A24C 5/32

(54) **TAUMELSCHEIBE FÜR EINE FÖRDERTROMMEL DER TABAK VERARBEITENDEN INDUSTRIE**
SWASHPLATE FOR A CONVEYOR DRUM IN THE TOBACCO PROCESSING INDUSTRY
PLATEAU OSCILLANT POUR UN TAMBOUR DE TRANSPORT DANS L'INDUSTRIE DE TRANSFORMATION DU TABAC

(30) Priorität: 21.08.2019 DE 102019122472
(43) Veröffentlichungstag der Anmeldung: 24.02.2021
(73) Patentinhaber: Körber Technologies GmbH, 21033 Hamburg (DE)
(72) Erfinder: NÜRNBERG, Michael, 21398 Neu Neetze (DE)
(74) Vertreter: Seemann & Partner Patentanwälte mbB

(56) Entgegenhaltungen:
- EP-A1- 1 033 083
- EP-A1- 2 965 639
- DE-A1- 19 909 465
- DE-A1-102008 063 847
- DE-B- 1 008 173

## Beschreibung

Die Erfindung betrifft eine Taumelscheibe für eine Fördertrommel der Tabak verarbeitenden Industrie mit einem Außenring und einem Innenring. Ferner betrifft die Erfindung eine Fördertrommel der Tabak verarbeitenden Industrie sowie eine Verwendung einer Taumelscheibe. Außerdem betrifft die Erfindung ein Verfahren zum Herstellen einer Taumelscheibe für eine Fördertrommel der Tabak verarbeitenden Industrie.

Taumelscheiben werden in Maschinen der Tabak verarbeitenden Industrie an Fördertrommeln eingesetzt, in deren entlang des Umfangs angeordneten Mulden stabförmige Artikel der Tabak verarbeitenden Industrie, wie zum Beispiel Filterstopfen, Tabakstöcke oder Zigaretten, queraxial gefördert werden. Die Taumelscheiben sorgen für eine längsaxiale Verschiebung der stabförmigen Artikel in ihren Mulden, indem sie einen mechanischen Druck auf die Frontfläche der Artikel ausüben.

Ein längsaxiales Verschieben der Artikel in den Mulden der Fördertrommel im Laufe ihrer queraxialen Förderung kann notwendig sein, wenn diese sich nicht in ihrer Soll-Lage befinden und in die Soll-Lage verschoben werden sollen. Ein Beispiel dafür ist bei der Vorbereitung von Gruppen aus Tabakstöcken und Filterstopfen zum Umhüllen mit einem beleimten Belagpapierblättchen gegeben. Hierbei werden jeweils zwei axial fluchtende Tabakstöcke in die Mulden eines umlaufenden Förderers, z.B. einer rotierenden Trommel, überführt. Zwischen den Tabakstöcken wird dann noch jeweils ein axial fluchtender Filterstopfen doppelter Gebrauchslänge abgelegt. Um eine Ablage des Filterstopfens zu gewährleisten, befinden sich zwischen den Tabakstöcken und den Filterstopfen einer Gruppe Abstände, die durch axiale Verschiebung der Tabakstöcke beseitigt werden müssen, damit die eine Gruppe bildenden Komponenten von Tabakstöcken und Filterstopfen dicht an dicht liegen.

In DE 1 008 173 A1 ist ein Verschiebemechanismus beschrieben, bei dem so genannte Taumelringe über eine Vielzahl von Federn an der Nabe einer die Gruppen in Mulden fördernden Trommel befestigt sind. An einer Verschiebestelle drücken Betätigungselemente die Taumelringe in Richtung auf die Gruppen, wobei die Ringe die außen liegenden Tabakstöcke zu den zwischen ihnen befindlichen Filterstopfen verschieben. Nach der Verschiebestelle drücken die Federn die Taumelringe wieder zurück, so dass nach Abförderung der zusammengeschobenen Gruppen neue Artikelgruppen in die Mulden übernommen werden können. Diese Art der federnden Aufhängung des Verschieberings über eine Vielzahl von Federn ist wegen der vielen zu Brüchen neigenden Federn mechanisch empfindlich und insbesondere für hohe Geschwindigkeiten nicht störungssicher.

In EP 1 033 083 B1 ist ein Taumelring beschrieben, der aus Silikonmaterial besteht. Am äußeren Endbereich des aus Silikon bestehenden Taumelrings bzw. Andrückrings ist ein aus starrem Material, z. B. aus Metall, bestehender, umlaufender Außenring vorgesehen, der in einem Verschiebebereich gegen die Stirnseiten der in Aufnahmemulden einer Fördertrommel angeordneten stabförmigen Artikel gedrückt wird. In einer Ausgestaltung weist der starre Andrückring im Bereich einer Mulde zur Aufnahme eines Artikels eine Durchbrechung auf.

Außerdem zeigt DE 10 2008 063 847 A1 Taumelscheiben, deren äußere Ringe Durchbrechungen aufweisen. Der äußere Ring der Taumelscheibe ist über einen elastischen Ring und einen inneren Befestigungsring mit der Nabe der Fördertrommel verbunden.

Eine Aufgabe der Erfindung besteht darin, eine Taumelscheibe für eine Fördertrommel und eine Maschine der Tabak verarbeitenden Industrie bereitzustellen, die einfach und kostengünstig in der Herstellung sein soll.

Gelöst wird diese Aufgabe durch eine Taumelscheibe für eine Fördertrommel der Tabak verarbeitenden Industrie mit einem Außenring und einem Innenring, wobei zwischen dem Innenring und dem Außenring in Umlaufrichtung mehrere, insbesondere mehr als drei, Federverbindungskörper vorgesehen sind, wobei die Federverbindungskörper mit dem Innenring und/oder mit dem Außenring stoffschlüssig oder einstoffig miteinander verbunden sind.

Die Erfindung beruht auf dem Gedanken, dass der Federverbindungskörper dauerhaft, insbesondere dauerhaft fest, und/oder unlösbar mit dem Innenring und/oder mit dem Außenring verbunden ist. Hierbei ist die Verbindungsstelle zwischen dem jeweiligen Federverbindungskörper und dem Innenring und/oder dem Außenring als stoffschlüssige Verbindung oder als einstoffige Verbindung ausgebildet, wodurch eine durchbrechungsfreie und/oder stoffeinteilige Verbindungsstelle ausgebildet ist.

Insbesondere ist die Verbindung zwischen den Federverbindungskörpern mit dem Innenring und/oder mit dem Außenring nicht lösbar, wodurch eine dauerhaft feste Verbindung der Federverbindungskörper mit dem Innenring und/oder mit dem Außenring jeweils ausgebildet ist. Vorzugsweise sind in Umlaufrichtung der Taumelscheibe zwischen den Federverbindungskörpern Aussparungen oder Durchbrechungen ausgebildet, wodurch das Gewicht der Taumelscheibe reduziert ist.

Gemäß einem weiteren Aspekt sind die Federverbindungskörper zwischen dem Innenring und dem Außenring angeordnet, wobei in einer Ausgestaltung die Federverbindungskörper jeweils mit dem Innenring und dem Außenring dauerhaft miteinander verbunden sind.

Als dauerhafte Verbindung zwischen den Federverbindungskörpern mit dem Innenring und/oder mit dem Außenring wird durch eine stoffschlüssige Verbindung oder durch eine einstoffige Verbindung gemäß der Erfindung ausgebildet**.**

Gemäß einem weiteren Aspekt ist vorzugsweise bei der Taumelscheibe vorgesehen, dass der Außenring und der Innenring und die Federverbindungskörper jeweils aus Metall hergestellt sind oder aus dem gleichen Metall, insbesondere Eisen, hergestellt sind. Beispielsweise sind der Außenring, der Innenring und die Federverbindungskörper aus einem VA-Stahl hergestellt.

Ferner zeichnet sich eine Weiterbildung der Taumelscheibe dadurch aus, dass die Taumelscheibe aus einem einstückigen, insbesondere einteiligen, Grundkörper hergestellt ist.

Vorzugsweise ist der, vorzugsweise flache, Grundkörper für die Taumelscheibe aus Metall hergestellt. Durch Verwendung einer Schneideinrichtung, wie z.B. einer Laserschneideinrichtung, ist es möglich, den flachen Grundkörper so zu bearbeiten, dass aus dem flachen Grundkörper die Taumelscheibe mit dem Außenring, dem Innenring und dem dazwischen angeordneten Federverbindungskörper herausgeschnitten wird. Hierdurch wird der Herstellungsprozess der Taumelscheibe vereinfacht.

Gemäß einer bevorzugten Ausgestaltung der Taumelscheibe ist weiterhin vorgesehen, dass die Federverbindungskörper jeweils eine Mäanderform aufweisen. Durch die Mäanderform der Federverbindungskörper wird eine elastisch belastbare Verbindung zwischen dem Innenring und dem Au-βenring bereitgestellt. Hierbei weisen die Federverbindungskörper Verbindungsenden auf, die unter Ausbildung einer, vorzugsweise stoffeinteiligen, Verbindung mit dem Innenring und/oder dem Außenring verbunden sind. Vorzugsweise erstrecken sich die Verbindungsenden der Federverbindungskörper bezogen auf den Mittelpunkt der Taumelscheibe in radialer Richtung vom Außenring nach innen oder vom Innenring nach außen.

Insbesondere sind die Verbindungsenden der jeweiligen Federverbindungskörper in radialer Richtung fluchtend ausgerichtet.

Gemäß einem weiteren Aspekt der Taumelscheibe ist vorgesehen, dass die Federverbindungskörper in Umlaufrichtung der Taumelscheibe in regelmäßigen Abständen angeordnet sind.

Außerdem zeichnet sich eine Ausgestaltung der Taumelscheibe dadurch aus, dass der Außenring und der Innenring und die Federverbindungskörper die gleiche Dicke aufweisen.

Insbesondere sind der Außenring und der Innenring jeweils als kreisrunde Ringe ausgebildet.

Um den Verschleiß im Einsatz der Taumelscheibe zu verringern, ist weiterhin vorgesehen, dass der Außenring auf wenigstens einer Seite gehärtet ist oder auf wenigstens einer Seite mit einer Härtebeschichtung versehen ist.

Die erfindungsgemäße Taumelscheibe einer Fördertrommel der Tabak verarbeitenden Industrie ist angepasst, um an einer Seitenfläche der Fördertrommel zur queraxialen Förderung von stabförmigen Artikeln der Tabak verarbeitenden Industrie mit Mulden zur Aufnahme der Artikel synchron mitrotierend angeordnet zu werden, um Artikel in ihren Mulden längsaxial mittels des Außenrings zu verschieben.

Mittels des bewegbaren Außenrings der Taumelscheibe werden die stabförmigen Artikel in den Aufnahmemulden der Fördertrommel längsaxial verschoben, indem die seitlich an den Aufnahmemulden angeordnete Taumelscheibe einen mechanischen Druck auf die Frontfläche der stabförmigen Artikel ausübt.

Darüber hinaus wird die Aufgabe gelöst durch eine Fördertrommel der Tabak verarbeitenden Industrie, die mit einer erfindungsgemäßen Taumelscheibe ausgebildet ist. Die Fördertrommel weist hierbei auf einem Trommelkörper in Umfangsrichtung hintereinander angeordnete Aufnahmemulden für stabförmige Artikel der Tabak verarbeitenden Industrie auf, wobei seitlich an den Aufnahmemulden auf einer Seite oder auf beiden Seiten jeweils eine Taumelscheibe, wie voranstehend beschrieben, angeordnet ist. Zur Bewegung der Taumelscheibe bzw. dem Außenring der Taumelscheibe ist hierfür an der Fördertrommel ein entsprechendes Betätigungsorgan vorgesehen. Hinsichtlich der weiteren Einzelheiten der Taumelscheibe wird auf die übrigen Ausführungen ausdrücklich verwiesen.

Außerdem wird die Aufgabe gelöst durch eine Verwendung einer voranstehend beschriebenen Taumelscheibe in einer Fördertrommel der Tabak verarbeitenden Industrie. Zur Vermeidung von Wiederholungen wird auf die obigen Ausführungen ausdrücklich verwiesen.

Ferner wird die Aufgabe gelöst durch ein Verfahren zum Herstellen einer Taumelscheibe für eine Fördertrommel der Tabak verarbeitenden Industrie, wobei ein, vorzugsweise einstückiger, flacher Grundkörper mittels einer Schneideinrichtung, insbesondere einer Laserschneideinrichtung, bearbeitet wird, so dass aus dem Grundkörper eine Taumelscheibe mit einem Außenring und mit einem Innenring und mehreren, insbesondere mehr als drei, zwischen dem Innenring und dem Außenring in Umlaufrichtung vorgesehenen Federverbindungskörper hergestellt wird, wobei die Taumelscheibe, wie voranstehend beschrieben, ausgebildet wird oder ist. Zu weiteren Einzelheiten wird auf die obigen Ausführungen zur Taumelscheibe ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung in Schrägansicht eines Ausschnitts einer Fördertrommel gemäß dem Stand der Technik,
- Fig. 2a bis 2d: schematisch jeweils Ansichten von erfindungsgemäßen Taumelscheiben in verschiedenen Ausführungsformen;
- Fig. 3: schematisch eine vergrößerte Ansicht einer erfindungsgemäßen Taumelscheibe im Ausschnitt.

Im Rahmen der Erfindung sind Merkmale, die mit "insbesondere" oder "vorzugsweise" gekennzeichnet sind, als fakultative Merkmale zu verstehen.

In den Zeichnungen sind jeweils gleiche oder gleichartige Elemente und/oder Teile mit denselben Bezugsziffern versehen, so dass von einer erneuten Vorstellung jeweils abgesehen wird.

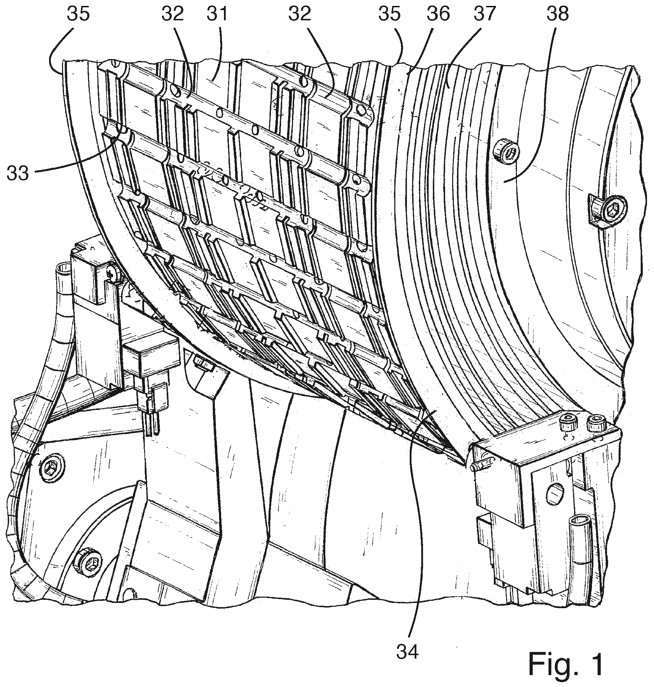

In Fig. 1 ist eine Fördertrommel 31 gemäß dem Stand der Technik ausschnittsweise schematisch in einer perspektivischen Darstellung gezeigt. Die Fördertrommel 31 ist insbesondere Bestandteil einer Maschine der Tabak verarbeitenden Industrie, wie z.B. einer Filteransetzmaschine oder Multisegmentfilterherstellungsmaschine oder dergleichen.

Die Oberfläche der Fördertrommel 31 weist Mulden 32 mit Saugluftbohrungen 33 auf, mittels deren stabförmige Artikel (nicht gezeigt) während ihrer queraxialen Förderung in den Mulden 32 der Fördertrommel 31 gehalten werden. Beiderseits der Fördertrommel 31 sind Taumelscheiben 34 angeordnet, die Außenringe bzw. äußere Ringe 35 aufweisen. Der äußere Ring 35 der Taumelscheiben 34 ist über einen elastischen Ring 37 mit jeweils einem Innenring bzw. einem inneren Befestigungsring 38 mit der Nabe der Fördertrommel 31 verbunden, so dass sich die Taumelscheibe 34 synchron mit der Fördertrommel 31 mitbewegt bzw. mitrotiert.

Der einstückige, elastische Ring 37 der Taumelscheibe 34 zwischen dem äußeren Ring 35 und dem Befestigungsring 38 ist aus Silikon hergestellt, wodurch es ermöglicht ist, dass der äußere Ring 35 der Taumelscheibe 34 gegenüber dem inneren Befestigungsring 38 der Taumelscheibe 34 in Richtung auf die Mulden 32 der Fördertrommel 31 mittels eines Bewegungsorgans oder -einrichtung (hier nicht dargestellt) bewegt werden kann. Diese Beweglichkeit führt dazu, dass bei größter Annäherung an die Mulden 32 darin angeordnete stabförmige Artikel längsaxial auf die Mittelpunkte der Mulden 32 mittels des äußeren Rings 35 hin verschoben werden.

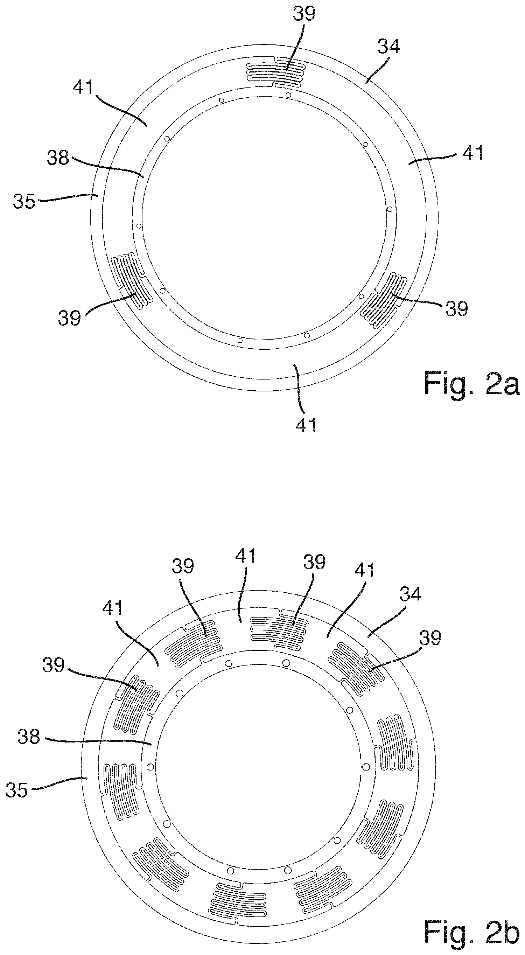

In den Figuren 2a bis 2d sind jeweils Ansichten einer erfindungsgemäßen Taumelscheibe 34 gemäß verschiedenen Ausführungsformen schematisch gezeigt.

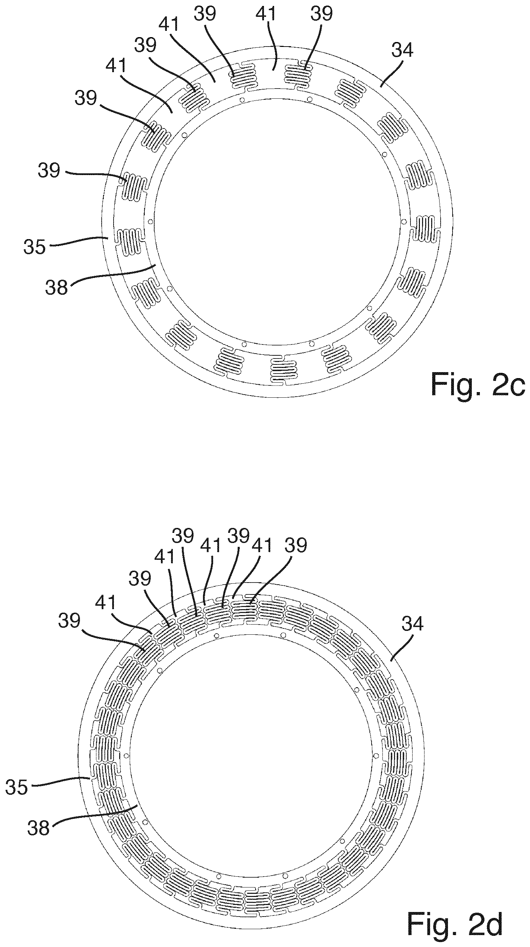

Die Taumelscheiben 34 weisen hierbei als Außenring den äußeren Ring 35 auf und als Innenring den Befestigungsring 38 auf. Zwischen dem konzentrisch ausgerichteten Befestigungsring 38 und dem äußeren Ring 35 sind in Umlaufrichtung der Taumelscheiben 34 Federverbindungskörper 39 in regelmäßigen Abständen angeordnet. Die Anzahl der Federverbindungskörper 39 kann je nach Anforderungsprofil an die Taumelscheibe 34 in der Anzahl der Federverbindungskörper 39 variieren. In Fig. 2a weist die Taumelscheibe 34 drei Federverbindungskörper 39 auf, während die in den Figuren 2b, 2c und 2d zehn Federverbindungskörper 39 (vgl. Fig. 2b), siebzehn Federverbindungskörper 39 (vgl. Fig. 2c) bzw. vierunddreißig Federverbindungskörper 39 (vgl. Fig. 2d) aufweist. Die Federverbindungskörper 39 sind in Umlaufrichtung der Taumelscheiben 34 in regelmäßigen Abständen angeordnet. Zwischen den Federverbindungskörpern 39 in Umlaufrichtung der Taumelscheiben 34 sind hierbei entsprechende Freiräume oder Aussparungen 41 ausgebildet. Die Federverbindungskörper 39 sind federelastisch ausgebildet, so dass bei Auslenkung des äußeren Rings 35 mittels eines Betätigungsorgans an einer Stelle der äußere Ring 35 zurück in seine ursprüngliche Lage gebracht wird.

Die Federverbindungskörper 39 sind hierbei dauerhaft fest mit dem Befestigungsring 38 und dem äußeren Ring 35 verbunden. Insbesondere ist hierbei die Verbindung der Federverbindungskörper 39 mit dem inneren Befestigungsring 38 und dem äußeren Ring 35 jeweils mittels einer stoffeinteiligen Verbindung verbunden. Vorzugsweise sind die Taumelscheiben 34 aus einem flachen Grundkörper, z.B. aus Metall, mittels einer Schneideinrichtung, wie z.B. einer Laserschneideinrichtung, ausgeschnitten, wodurch eine einfache Herstellung der Taumelscheiben 34 ermöglicht ist.

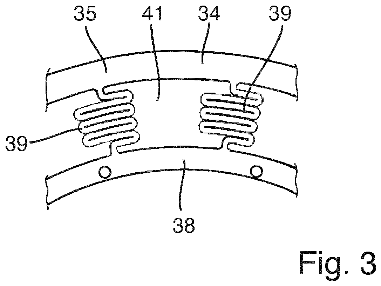

In Fig. 3 ist beispielhaft ein Ausschnitt einer erfindungsgemäßen Taumelscheibe 34 dargestellt. Die Federverbindungskörper 39 weisen eine mäanderförmige Form auf. Im Rahmen der Erfindung ist es auch denkbar, dass die Federverbindungskörper 39 andere Formen, wie z.B. eine Zickzackform, aufweisen können.

Bei dem Ausführungsbeispiel in Fig. 3 sind die Enden der Verbindungen der Federverbindungskörper 39 in radialer Richtung zum Mittelpunkt der Taumelscheibe 34 fluchtend ausgerichtet. Dadurch, dass die Taumelscheibe 34 aus einem einstückigen bzw. einteiligen Grundkörper, z.B. aus VA-Stahl, hergestellt wird, ist ein nahtloser Übergang bzw. eine nahtlose Verbindung zwischen dem Befestigungsring 38 und dem Federverbindungskörper 39 sowie zwischen dem Federverbindungskörper 39 und dem äußeren Ring 35 ausgebildet. Insbesondere entspricht die Dicke der Federverbindungskörper 39 der Dicke des Befestigungsrings 38 bzw. des äußeren Rings 35.

### Bezugszeichenliste

- 31: Fördertrommel
- 32: Mulde
- 33: Saugluftbohrung
- 34: Taumelscheibe
- 35: äußerer Ring
- 37: elastischer Ring
- 38: innerer Befestigungsring
- 39: Federverbindungskörper
- 41: Aussparung

## Patentansprüche

1. Taumelscheibe (34) für eine Fördertrommel (31) der Tabak verarbeitenden Industrie mit einem Außenring (35) und einem Innenring (38), wobei zwischen dem Innenring (38) und dem Außenring (35) in Umlaufrichtung mehrere, insbesondere mehr als drei, Federverbindungskörper (39) vorgesehen sind, **dadurch gekennzeichnet, dass** , die Federverbindungskörper (39) mit dem Innenring (38) und/oder mit dem Außenring (35) stoffschlüssig oder einstoffig miteinander verbunden sind.

2. Taumelscheibe (34) nach Anspruch 1, **dadurch gekennzeichnet, dass** der Außenring (35) und der Innenring (38) und die Federverbindungskörper (39) aus jeweils Metall hergestellt sind oder aus dem gleichen Metall, insbesondere Eisen, hergestellt sind.

3. Taumelscheibe (34) nach Anspruch 1 oder 2, **dadurch gekennzeichnet, dass** die Taumelscheibe (34) aus einem einstückigen, insbesondere einteiligen, Grundkörper hergestellt ist.

4. Taumelscheibe (34) nach einem der Ansprüche 1 bis 3, **dadurch gekennzeichnet, dass** die Federverbindungskörper (39) jeweils eine Mäanderform aufweisen.

5. Taumelscheibe (34) nach einem der Ansprüche 1 bis 4, **dadurch gekennzeichnet, dass** die Federverbindungskörper (39) in Umlaufrichtung der Taumelscheibe (34) in regelmäßigen Abständen angeordnet sind.

6. Taumelscheibe (34) nach einem der Ansprüche 1 bis 5, **dadurch gekennzeichnet, dass** der Außenring (35) und der Innenring (38) und die Federverbindungskörper (39) die gleiche Dicke aufweisen.

7. Taumelscheibe (34) nach einem der Ansprüche 1 bis 6, **dadurch gekennzeichnet, dass** der Außenring (35) auf wenigstens einer Seite gehärtet ist oder auf wenigstens einer Seite mit einer Härtebeschichtung versehen ist.

8. Fördertrommel (31) der Tabak verarbeitenden Industrie mit einer Taumelscheibe (34) nach einem der Ansprüche 1 bis 7.

9. Verwendung einer Taumelscheibe (34) nach einem der Ansprüche 1 bis 7 in einer Fördertrommel (31) der Tabak verarbeitenden Industrie.

10. Verfahren zum Herstellen einer Taumelscheibe (34) für eine Fördertrommel (31) der Tabak verarbeitenden Industrie, wobei ein, vorzugsweise einstückiger, flacher Grundkörper mittels einer Schneideinrichtung, insbesondere Laserschneideinrichtung, bearbeitet wird, so dass aus dem Grundkörper eine Taumelscheibe (34) mit einem Außenring (35) und mit einem Innenring (38) und mehreren, insbesondere mehr als drei, zwischen dem Innenring (38) und dem Au-ßenring (35) in Umlaufrichtung vorgesehenen Federverbindungskörper (39) hergestellt wird, wobei die Taumelscheibe (34) nach einem der Ansprüche 1 bis 7 ausgebildet wird oder ist.

## Claims

1. A swashplate (34) for a conveyor drum (31) of the tobacco processing industry comprising an outer ring (35) and an inner ring (38), wherein multiple, in particular more than three, spring connection bodies (39) are provided between the inner ring (38) and the outer ring (35) in the circumferential direction, **characterized in that** the spring connection bodies (39) are materially or integrally connected to the inner ring (38) and/or to the outer ring (35).

2. The swashplate (34) according to claim 1, **characterized in that** the outer ring (35) and the inner ring (38) and the spring connection bodies (39) are manufactured in each case from metal or are manufactured from the same metal, in particular iron.

3. The swashplate (34) according to claim 1 or 2, **characterized in that** the swashplate (34) is manufactured from a one-piece, in particular one-part, main body.

4. The swashplate (34) according to any one of claims 1 to 3, **characterized in that** the spring connection bodies (39) in each case have a meandering shape.

5. The swashplate (34) according to any one of claims 1 to 4, **characterized in that** the spring connection bodies (39) are arranged at regular intervals in the circumferential direction of the swashplate (34).

6. The swashplate (34) according to any one of claims 1 to 5, **characterized in that** the outer ring (35) and the inner ring (38) and the spring connection bodies (39) have the same thickness.

7. The swashplate (34) according to any one of claims 1 to 6, **characterized in that** the outer ring (35) is hardened on at least one side or is provided with a hard coating on at least one side.

8. A conveyor drum (31) of the tobacco processing industry comprising a swashplate (34) according to any one of claims 1 to 7.

9. A use of a swashplate (34) according to any one of claims 1 to 7 in a conveyor drum (31) of the tobacco processing industry.

10. A method for manufacturing a swashplate (34) for a conveyor drum (31) of the tobacco processing industry, wherein a, preferably one-piece, planar main body is machined by means of a cutting apparatus, in particular a laser cutting apparatus, such that a swashplate (34) comprising an outer ring (35) and an inner ring (38) and multiple, in particular more than three, spring connection bodies (39) provided between the inner ring (38) and the outer ring (35) in the circumferential direction is manufactured from the main body, wherein the swashplate (34) is or has been designed according to any one of claims 1 to 7.

## Revendications

1. Plateau oscillant (34) pour un tambour de transport (31) de l'industrie de transformation du tabac, comprenant un anneau extérieur (35) et un anneau intérieur (38), avec plusieurs, en particulier plus de trois, corps de liaison à ressort (39) prévus entre l'anneau intérieur (38) et l'anneau extérieur (35) dans le sens de la rotation, **caractérisé en ce que** les corps de liaison à ressort (39) sont reliés les uns aux autres et à l'anneau intérieur (38) et/ou l'anneau extérieur (35) par une liaison par des matières ou à une seule matière.

2. Plateau oscillant (34) selon la revendication 1, **caractérisé en ce que** l'anneau extérieur (35) et l'anneau intérieur (38) ainsi que les corps de liaison à ressort (39) sont chacun réalisés en métal ou sont réalisés dans le même métal, notamment en fer.

3. Plateau oscillant (34) selon la revendication 1 ou la revendication 2, **caractérisé en ce que** le plateau oscillant (34) est réalisé à partir d'un corps de base d'une seule pièce, en particulier en une seule pièce.

4. Plateau oscillant (34) selon l'une des revendications 1 à 3, **caractérisé en ce que** les corps de liaison à ressort (39) présentent chacun une forme de méandre.

5. Plateau oscillant (34) selon l'une des revendications 1 à 4, **caractérisé en ce que** les corps de liaison à ressort (39) sont agencés à intervalles réguliers dans la direction circonférentielle du plateau oscillant (34).

6. Plateau oscillant (34) selon l'une des revendications 1 à 5, **caractérisé en ce que** l'anneau extérieur (35) et l'anneau intérieur (38) et les corps de liaison élastique (39) ont la même épaisseur.

7. Plateau oscillant (34) selon l'une des revendications 1 à 6, **caractérisé en ce que** l'anneau extérieur (35) est trempé sur au moins une face ou est pourvu d'un revêtement de trempe sur au moins une face.

8. Tambour de transport (31) de l'industrie de transformation du tabac avec un plateau oscillant (34) selon l'une des revendications 1 à 7.

9. Utilisation d'un plateau oscillant (34) selon l'une des revendications 1 à 7 dans un tambour de transport (31) de l'industrie de transformation du tabac.

10. Procédé de fabrication d'un plateau oscillant (34) pour un tambour de transport (31) de l'industrie de transformation du tabac, dans lequel un corps de base plat, de préférence en une seule pièce, est usiné au moyen d'un dispositif de découpe, en particulier un dispositif de découpe au laser, de sorte qu'un plateau oscillant (34) est fabriqué à partir du corps de base avec un anneau extérieur (35) et avec un anneau intérieur (38) et avec plusieurs, en particulier plus de trois, corps de liaison à ressort (39) prévus entre l'anneau intérieur (38) et l'anneau extérieur (35) dans la direction circonférentielle, le plateau oscillant (34) étant selon l'une des revendications 1 à 7 ou étant réalisé selon l'une de ces revendications.
